# EUROPEAN PATENT APPLICATION

(11) **EP 1 559 381 A1**
(43) Date of publication of application: **03.08.2005**
(21) Application number: 05250128.5
(22) Date of filing: 12.01.2005
(51) Int. Cl.: A61C 19/10, A61C 19/00, F21S 8/00

(54) **Lamp and method for dental shade selection**

(30) Priority: 27.01.2004 US 765266
(71) Applicant: Kerr Corporation, Orange, CA 92867 (US)
(72) Inventor: Streib, George H., Washington Connecticut 06793 (US); Gill, Owen J., Southbury Connecticut 06488 (US)
(74) Representative: Findlay, Alice Rosemary

(57) **Abstract**

A dental shade lamp for visually comparing a dental shade to a natural tooth comprises a housing having an aperture formed through the housing and a light source for illuminating the dental shade and natural tooth. The aperture provides an unobstructed view of the dental shade and natural tooth while maintaining the shade lamp in close proximity to the dental shade and natural tooth. The light source may be fluorescent light bulbs positioned adjacent the aperture that emit light having a color temperature of greater than about 6,000 K, to more closely approximate natural light conditions, and an illuminance intensity of greater than about 75 foot-candles, to limit the effects from ambient lighting conditions. In this way, a more accurate visual comparison can be made resulting in an accurate match between prosthetic teeth and natural teeth.

## Description

The present invention relates to dental devices, and more particularly, to a shade lamp and method for accurately comparing dental shades to natural teeth.

A major factor in determining the quality and success of dental restorative procedures, such as that requiring dental prostheses or prosthetic teeth, is the color matching of the dental prostheses to a patient's natural teeth. To color match dental prostheses with natural teeth, a dentist will typically make a visual comparison between the natural teeth and standard colored dental shades. Dental shades are typically preformed plastic or ceramic dental prostheses that vary certain parameters, such as hue, color and/or saturation, to provide a wide variety of color variations for a more accurate comparison and matching. A dentist positions the dental shade immediately adjacent a natural tooth, and preferably the natural tooth that will subsequently abut the prosthetic tooth, and makes a decision as to the best dental shade that visually appears to match the natural tooth. The dental shades then correspond to known methods of manufacturing plastic, ceramic, or composite dental prostheses with the specified dental shade color.

Visual color matching as described above can be a highly problematic process due to the relatively large number and complexity of factors that determine the human eye's ability to perceive color. This method of color matching is also subjective. Oftentimes when making a visual comparison, what once looked like a positive match between a dental shade and a natural tooth results in dental prostheses that are noticeably mismatched and unattractive. The end result is that the dentist must eventually find the proper match through a trial and error procedure. This is a time consuming and costly method of matching dental prostheses to natural teeth.

In one approach to this problem, there have been attempts to provide an objective scale for comparing a dental shade and natural tooth by focusing on the various factors that affect color perception, such as the translucence of teeth. These attempts, however, often result in highly complex, bulky apparatus that in the end may only account for a small number of parameters that affect color perception and therefore provide mismatched color prostheses based upon a comparison that initially showed a positive match. Additionally, in the clinical environment, these devices and methods often prove expensive and/or unworkable.

Because of the highly complex nature of color perception, another approach of previous apparatus and methods focuses on the more practical and inexpensive visual comparison for matching dental prostheses to natural teeth. This approach essentially neglects the minutia and complexity of color perception and instead focuses on the primary factors for affecting a visual comparison. For instance, this would include such factors as the color temperature and illuminance intensity of the light used to illuminate an object.

In these apparatus and methods, a light source or lamp is typically brought close to a patient's mouth to illuminate the dental shade and natural tooth. The light source is typically designed to approximate natural light. Natural light, which is very near white light, is the light received by the sun during the daytime hours (north sky daylight) under which most objects are viewed in their natural state. This is in contrast to artificial light, such as that produced by the fluorescent bulbs of a doctor's office. This difference in lighting conditions is a primary factor for mismatching dental prostheses based on a visual comparison. With the aid of the lamp, a visual comparison is made between the dental shade and the natural tooth. These lamp apparatus and methods have a number of drawbacks, however.

By way of example, it is known that prior art lamps use bulbs that emit light at a color temperature between 5,000 K and 5,500 K. These are the D50 and D55 standards known in the art and used extensively in the prior art lamps. Light emitted at these color temperatures, however, does not adequately approximate natural or white light but give objects viewed in such light a slight redish tint. Moreover, prior art lamps must be placed adjacent to the patient's mouth so as to adequately illuminate the dental shade and natural tooth yet allow the dentist or clinician to clearly view these objects in order to make a comparison. To obtain an unobstructed view of the dental shade and natural tooth with current lamps, the lamp must be pulled away or tilted away from the patient's mouth thus reducing the quality of illumination. Furthermore, moving the lamp so as to provide an unobstructed view for the doctor also allows ambient lighting to enter the patient's mouth thereby affecting the overall color temperature of the light and consequently affecting the perception of color.

There is a need for a shade lamp that emits light at a color temperature that more closely approximates natural or white light and provides high quality illumination while limiting the effects of external lighting conditions on color perception. Such a shade lamp could be used to provide a more accurate color comparison between dental shades and natural teeth.

In accordance with one aspect of the present invention, a shade lamp comprises a housing having an aperture formed through the housing. The aperture provides an unobstructed view of the dental shade and natural tooth while maintaining the shade lamp in close proximity to these objects. The shade lamp further comprises a light source coupled to the housing for emitting light from the housing and illuminating the dental shade and natural tooth. The light source is preferably configured to emit light that closely approximates natural light thus permitting a more accurate color comparison between the dental shade and natural tooth.

In one embodiment, the housing is generally rectangular in shape having a top and bottom wall, two end walls, and two side walls. The aperture is formed in the two side walls. The aperture is also generally rectangular in shape having a pair of opposed longer sides and a pair of opposed shorter sides. The light source comprises two fluorescent light bulbs that are placed adjacent each of the opposed longer sides of the aperture and emit light from one of the side surfaces of the housing to illuminate the dental shade and natural tooth. The light source is adapted to emit light at a color temperature between about 5,000 K and about 6,500 K, and preferably at a color temperature of greater than about 6,000 K, which provides an improved approximation of natural light conditions. Additionally, to prevent the ambient lighting conditions from affecting the color matching, the light source is also adapted to emit light at an illumination intensity of between about 50 foot-candles and about 150 foot-candles, and preferably at an illumination intensity of greater than about 75 foot-candles.

The shade lamp housing may further include a handle for easy and convenient hand held operation of the lamp by a doctor or clinician. The shade lamp may also further include a power source carried by the housing and adapted to operate the light source. The power source may comprise at least one battery that can be conveniently housed in the handle and provide sufficient power to operate the light source. A detachable magnifying glass may also be provided that couples to the housing and positioned adjacent to the aperture such that visualization through the aperture occurs through the magnifying glass.

To use the shade lamp , a dental shade is placed adjacent a natural tooth. The dental shade lamp is placed adjacent the dental shade and natural tooth and light from the light source is emitted to illuminate the dental shade and natural tooth. Light is emitted at a color temperature of greater than about 6,000 K and at an illumination of greater than about 75 ft-candies. The illuminated dental shade and natural tooth is then viewed by a dentist or other clinician through the aperture in the shade lamp to make an accurate comparison between the two objects thereby providing a more accurate color match between prosthetic teeth and natural teeth.

The present invention at least in the preferred embodiments provides an improved shade lamp and method for comparing dental shades and natural teeth addressing various drawbacks of existing technology. The use of an improved dental shade lamp and method for accurately matching dental shades and natural teeth results in accurately and consistently matched dental prostheses.

The invention will now be further described by way of example with reference to the accompanying drawings in which:
Fig. 1 is a perspective view of a shade lamp in accordance with the principles of the present invention;
Fig. 2 is a perspective view of the shade lamp of Fig. 1 showing the position of the bulbs in relation to the aperture formed through the shade housing.

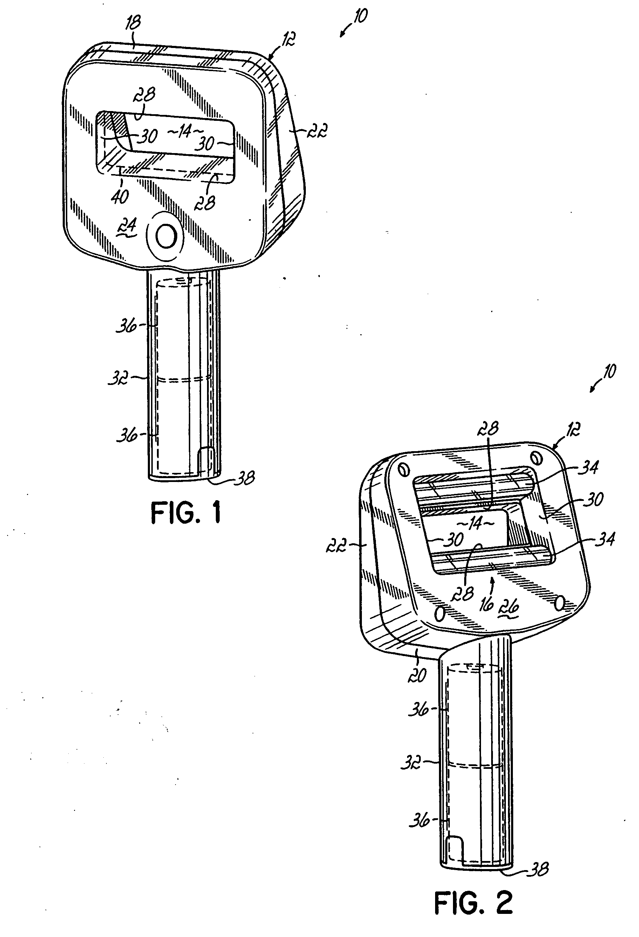

With reference to Figs. 1-2, there is shown a shade lamp 10 constructed in accordance with the principles of the present invention. Shade lamp 10 comprises a housing 12 having an aperture 14 formed through housing 12 and a light source 16 for illuminating a dental shade and natural tooth (not shown) so as to provide an accurate match between dental prostheses and natural teeth.

Housing 12 is generally rectangular in shape having a top and bottom wall 18, 20 respectively, two end walls 22, and first and second side walls 24, 26. The aperture 14 is formed in first and second side walls 24, 26. Aperture 14 is also generally rectangular having a pair of opposed longer sides 28 and a pair of opposed shorter sides 30. Aperture 14 provides an unobstructed view of the dental shade and natural tooth through housing 12. Housing 12 may also include a handle 32 coupled to the bottom wall 20 of housing 12. As shown in Fig. 1, handle 32 may, for example, comprise a hollow cylindrical tube extending away from housing 12. Handle 32 allows for easy and convenient hand held operation of the shade lamp by a dentist or other clinician.

Housing 12 also includes a light source 16 for illuminating the dental shade and natural tooth. As shown in Fig. 2, light source 16 may comprise light bulbs, such as fluorescent light bulbs 34, positioned adjacent at least a portion of the aperture 14, such as along opposed longer sides 28. Preferably, fluorescent light bulbs 34 may be cold cathode bulbs having red, green and blue phosphors. Light source 16 is not limited to only fluorescent bulbs 34, but may also include any suitable light-emitting component known in the art. Fluorescent bulbs 34 are positioned adjacent second side wall 26 to emit light from side wall 26 and are not visible from the first side wall 24 through aperture 14. To approximate natural or white light, light source 16 is adapted to emit light at a color temperature of between about 5,000 K and about 6,500 K, and preferably at a color temperature of greater than about 6,000 K to better approximate natural lighting conditions. Moreover, light source 16 is further adapted to emit light at an illumination intensity of between about 50 foot-candles and about 150 foot-candles, and preferably at an illumination intensity of greater than about 75 foot-candles to prevent ambient lighting conditions from affecting the visual comparison.

Shade lamp 10 may further include a power source carried by housing 12, such as batteries 36 adapted to operate lighting source 16, such as fluorescent bulbs 34. Batteries 36 may be conveniently housed in handle 32 through access end 38. Batteries 36 may be of the rechargeable type such that shade lamp 10 may be recharged on a nightly basis or as needed. Batteries 36 may also be the disposable type where new batteries are inserted on a regular interval or as needed. A battery-operated shade lamp 10 advantageously provides a self-contained lamp that is independent of external power sources, highly mobile, and easily manipulated. These features are particularly useful in the clinical environment such as a dentist's office.

To enhance the image of the dental shade and natural tooth viewed through aperture 14, shade lamp 10 may further include a detachable magnifying glass 40 coupled to housing 12 and positioned adjacent aperture 14 such that when a doctor looks through aperture 14, the doctor also looks through magnifying glass 40. In this way, the dental shade and natural tooth are magnified providing a close up comparison and a more accurate comparison.

In use, the shade lamp 10 illustrated in Figs. 1-2 provides a more accurate comparison between a dental shade and a natural tooth. First, a dental shade is placed adjacent to a natural tooth and preferably the natural tooth that will abut the dental prosthetic. The shade lamp 10 of the present invention is then positioned adjacent the dental shade and natural tooth. Light from fluorescent bulbs 34 is then emitted from lamp 10 to illuminate the dental shade and natural tooth. A dentist or other clinician then views the dental shade and natural tooth through aperture 14 in housing 12 to make an accurate comparison between the dental shade and natural tooth.

The shade lamp and method of use provide a number of advantages over prior shade lamps and methods currently used to match dental prostheses with natural teeth. First, shade lamps that emit light having a color temperature of between about 5,000 K and about 5,500 K are not neutral white light but give objects viewed in such light a slight redish tint. The shade lamp preferably uses a light source adapted to emit light having a color temperature of between about 5,000 K and about 6,500 K and preferably greater than about 6,000 K. Light having a color temperature of greater than about 6,000 K better approximates natural or white light conditions and thus provides a more accurate perception of color.

Providing an aperture through the shade lamp permits an unobstructed view of the dental shade and natural tooth. This allows the dental shade to be positioned close to the dental shade and natural tooth which in turn maximizes the illumination from the light source and minimizes any interference from the ambient lighting conditions in making an accurate comparison.

While the present invention has been illustrated by the description of embodiments thereof, and while the embodiments have been described in considerable detail, additional advantages and modifications will readily appear to those skilled in the art.

## Claims

1. A dental shade lamp for visually comparing a dental shade to a natural tooth, said shade lamp comprising a housing, an aperture formed in said housing, said aperture permitting an unobstructed view through said housing, and a light source coupled to said housing for emitting light from said housing and illuminating the dental shade and natural tooth thereby permitting an accurate visual comparison through said aperture between the dental shade and natural tooth.

2. The dental shade lamp of claim 1 wherein said housing has a top and bottom wall, two end walls, and two side walls.

3. The dental shade lamp of claim 2 wherein said housing is generally rectangular in shape.

4. The dental shade lamp of any preceding claim wherein said housing further comprises a handle for permitting hand held operation by a user.

5. The dental shade lamp of claim 4 as dependent on either claim 2 or claim 3 wherein the handle extends from said bottom wall.

6. The dental shade lamp of any preceding claim wherein said aperture has a pair of opposed sides.

7. The dental shade lamp of claim 6 wherein said aperture is generally rectangular in shape.

8. The dental shade lamp of either claim 6 or claim 7 wherein said light source further comprises a light positioned adjacent each of said opposed longer sides of said aperture.

9. The dental shade lamp of any one of claims 1 to 7 wherein said light source extends along at least a portion of said aperture.

10. The dental shade lamp of any preceding claim wherein said light source further comprises at least one fluorescent light bulb.

11. The dental shade lamp of any preceding claim wherein said light source is adapted to emit light having a color temperature between about 5,000 K and about 6,500 K.

12. The dental shade lamp of any preceding claim wherein said light source is adapted to emit light at a color temperature of greater than about 6,000 K.

13. The dental shade of any preceding claim wherein said light source is adapted to emit light having an illuminance intensity of between about 50 foot-candles and about 150 foot-candles.

14. The dental shade lamp of any preceding claim wherein said light source is adapted to emit light having an illuminance intensity of greater than about 75 foot-candles.

15. The dental shade lamp of any preceding claim further comprising a power source carried by said housing, said power source adapted to operate said light source.

16. The dental shade lamp of claim 15 wherein said power source comprises at least one battery.

17. The dental shade lamp of any preceding claim further comprising a magnifying glass coupled to said housing and positioned such that visualization through said aperture also takes place through said magnifying glass.

18. A method for visually comparing a dental shade to a natural tooth comprising placing a dental shade adjacent a natural tooth, illuminating the dental shade and natural tooth using artificial light having a color temperature of greater than about 6,000 K, and viewing the dental shade and natural tooth to make an accurate comparison between the dental shade and natural tooth.

19. The method of claim 18 wherein illuminating the dental shade and natural tooth further comprises illuminating the dental shade and natural tooth using light having a color temperature of approximately 6,500 K.

20. The method of claim 19 wherein using light having a color temperature of approximately 6,500 K further comprises using fluorescent light having a color temperature of approximately 6,500 K.

21. The method of any one of claims 18 to 20 wherein illuminating the dental shade and natural tooth further comprises illuminating the dental shade and natural tooth using light having an illuminance intensity between about 50 foot-candles and about 150 foot-candles.
